# EUROPÄISCHE PATENTSCHRIFT

(11) **EP 1 668 466 B1**
(45) Veröffentlichungstag und Bekanntmachung des Hinweises auf die Patenterteilung: **27.02.2008**
(21) Anmeldenummer: 04787174.4
(22) Anmeldetag: 20.09.2004
(51) Int. Cl.: G06F 21/00

(54) **EINRÄUMUNG EINES ZUGRIFFS AUF EIN COMPUTERBASIERTES OBJEKT**
GRANTING AN ACCESS TO A COMPUTER-BASED OBJECT
AMENAGEMENT D'UN ACCES A UN OBJET INFORMATISE

(30) Priorität: 30.09.2003 DE 10345527
(43) Veröffentlichungstag der Anmeldung: 14.06.2006
(73) Patentinhaber: SIEMENS AKTIENGESELLSCHAFT, 80333 München (DE)
(72) Erfinder: BROCKHAUS, Hendrik, 85579 Unterbiberg (DE); FURCH, Andreas, 85356 Freising (DE); WONDOLLEK, Kay-Christian, 85764 Oberschleissheim (DE)
(86) Internationale Anmeldenummer: PCT/EP2004/052243
(87) Internationale Veröffentlichungsnummer: WO 2005/031545

(56) Entgegenhaltungen:
- EP-A- 0 803 789
- EP-A- 1 076 279
- US-A1- 2003 161 473
- SCHNEIER B: "AUTHENTICATION" APPLIED CRYPTOGRAPHY. PROTOCOLS, ALGORITHMS, AND SOURCE CODE IN C, NEW YORK, JOHN WILEY & SONS, US, 1996, Seiten 52-65,178, XP002908685 ISBN: 0-471-11709-9

## Beschreibung

Die vorliegende Erfindung betrifft ein Verfahren zur Einräumung eines Zugriffs auf ein computerbasiertes Objekt und ein Steuerungsprogramm zur Durchführung des Verfahrens.

Durch unberechtigte Benutzung von Computerprogrammen entstehen weltweit immense Schäden. Um diesem entgegenzuwirken, werden Lösungen zum Schutz von Computerprogrammen vor unberechtigter Benutzung entwickelt.

Eine Übermittlung verschlüsselter Informationen zur Aktivierung eines Computerprogramms dient einer Verhinderung von nicht autorisierten Vervielfältigungen des Computerprogramms. Entsprechende Verfahren dienen beispielsweise außerdem als technische Voraussetzung, um Computerprogramme als Produkte über E-Commerce zu vertreiben. Bei bisher bekannten Verfahren zur Aktivierung von Computerprogrammen werden Computerprogramme anhand jeweils eines Registrierungsschlüssels freigeschaltet. Für eine Freischaltung eines Computerprogramms wird der Registrierungsschlüssel, der einer Computerprogrammlizenz fest zugeordnet ist, manuell eingegeben bzw. von einem Datenträger eingespielt. Insbesondere bei einer Vielzahl von auf unterschiedlichen Computern installierten Computerprogrammen resultiert hieraus ein hoher Addministrationsaufwand, der mit personalintensiven Bedien- und Wartungsarbeiten verbunden ist.

Aus EP 1 191 419 A2 ist Verfahren bekannt, bei dem vorgebbare Funktionen eines Computerprogramms für eine wählbare Nutzungsdauer durch Modifikation eines Registrierungsschlüsselpaares freigeschaltet werden können. Das Registrierungsschlüsselpaares weist zumindest eine gegenüber Benutzerzugriffen gesperrten Teilinformation auf. Die freizuschaltenden Funktionen müssen nicht notwendigerweise bereits bei einer Erstinstallation des Computerprogramms für eine Freischaltung zur Verfügung gestanden haben, sondern können auch nachträglich hinzugewählt werden. Zur Freischaltung ist kein Einsatz von Bedien- und Wartungspersonal am Ort des Computers erforderlich, auf der das jeweilige Computerprogramm installiert ist.

Bestandteile des Registrierungsschlüsselpaares entsprechend dem in EP 1 191 419 A2 beschriebenen Verfahren sind Applikationsinformationen und ein Applikationswert. Die Applikationsinformationen werden an einem ersten Computer eingegeben, auf der das zu registrierende Computerprogramm installiert ist, bzw. durch den ersten Computer generiert. Der Applikationswert wird in einem zweiten Computer mittels Codierung aus den Applikationsinformationen berechnet.

Bei einer Registrierung eines Computerprogramms oder einer Änderung der Registrierung werden erste Applikationsinformationen mit zumindest einer gegenüber Benutzerzugriffen gesperrten Teilinformation an den zweiten Computer übermittelt. Im zweiten Computer wird aus den ersten Applikationsinformationen ein Applikationswert berechnet, der nachfolgend an den ersten Computer übermittelt wird. Mittels Decodierung werden im ersten Computer aus dem Applikationswert zweite Applikationsinformationen ermittelt. Die ersten und die zweiten Applikationsinformationen werden bei einem Ausführungsbeginn des Computerprogramms auf Übereinstimmung überprüft. In Abhängigkeit der sich bei der Überprüfung ergebenden Abweichungen werden vorgebbare Funktionen des Computerprogramms freigeschaltet.

Aus EP 1 076 279 A1 ist ein Verfahren bekannt, in dem der verschlüsselte Lizenzcode mittels eines privaten Schlüssels einer vertrauenswürdigen Instanz signiert an ein trusted module übermittelt wird.

Der vorliegenden Erfindung liegt die Aufgabe zugrunde ein Verfahren, das einen erhöhten Schutz vor unberechtigter Benutzung von in einer Recheneinrichtung bereitgestellten Ressourcen bietet, sowie eine zur automatisierten Durchführung des Verfahrens geeignete Implementierung anzugeben.

Diese Aufgabe wird erfindungsgemäß durch ein Verfahren mit den in Anspruch 1 und ein Steuerungsprogramm mit den in Anspruch 10 angegebenen Merkmalen gelöst. Vorteilhafte Ausgestaltungen der vorliegenden Erfindung sind in den abhängigen Ansprüchen angegeben.

Erfindungsgemäß resultiert ein erhöhter Schutz vor unberechtigter Benutzung von in einer Recheneinrichtung bereitgestellten Ressourcen daraus, daß als eine Voraussetzung zur Einräumung eines Zugriffs auf ein computerbasiertes Objekt eine Speicherkarte mit einem Programmcodeprozessor und eine Lizenzinformation bereitgestellt werden. Auf der Speicherkarte sind zumindest ein der Speicherkarte zugeordneter öffentlicher und privater Schlüssel abgespeichert. Die Lizenzinformation umfaßt zumindest einen mittels des der Speicherkarte zugeordneten öffentlichen Schlüssels verschlüsselten Lizenzcode und wird an einer den Zugriff auf das computerbasierte. Objekt steuernden Recheneinrichtung bereitgestellt.

Erfindungsgemäß wird aus einer von der Speicherkarte generierten ersten Zufallszahl und aus einer durch die Recheneinrichtung bereitgestellten zweiten Zufallszahl ein symmetrischer Schlüssel erzeugt, der für die Speicherkarte und die Recheneinrichtung zugänglich gemacht wird. Der verschlüsselte Lizenzcode und eine mit einem unter Verwendung des symmetrischen Schlüssels verschlüsselten Hash-Wert versehene Angabe einer von der Speicherkarte auszuführenden Funktion zur Entschlüsselung des Lizenzcodes werden an die Speicherkarte übermittelt. Der verschlüsselte Hash-Wert wird von der Speicherkarte entschlüsselt und mit einem für die Angabe der von der Speicherkarte auszuführenden Funktion berechneten Hash-Wert auf Übereinstimmung überprüft. Bei positivem Überprüfungsergebnis wird die Funktion zur Entschlüsselung des Lizenzcodes durch die Speicherkarte ausgeführt und ein entschlüsselter Lizenzcode an die Recheneinrichtung übermittelt. Der entschlüsselte Lizenzcode wird dann zumindest temporär zum Zugriff auf das computerbasierte Objekt bereitgestellt.

Unter Recheneinrichtung sind beispielsweise ohne Beschränkung der Allgemeinheit dieses Begriffs PCs, Notebooks, Server, PDAs, Mobiltelefone, Geldautomaten, Steuerungsmodule in der Automatisierungs-, Fahrzeug-, Kommunikations- oder Medizintechnik zu verstehen - allgemein Einrichtungen, in denen Computerprogramme ablaufen können. Des weiteren sind computerbasierte Objekte beispielsweise ohne Beschränkung der Allgemeinheit dieses Begriffs Betriebssysteme, Steuerungs- oder Anwendungsprogramme, durch Betriebssysteme, Steuerungs- oder Anwendungsprogramme bereitgestellte Dienste, Leistungsmerkmale, Funktionen oder Prozeduren, Zugriffsrechte auf Peripheriegeräte sowie auf einem Speichermedium befindliche Daten.

Entsprechend einer vorteilhaften Weiterbildung der vorliegenden Erfindung wird der öffentliche Schlüssel der vertrauenswürdigen Instanz vor Manipulationen geschützt an der Recheneinrichtung bereitgestellt. Außerdem ist die Lizenzinformation mittels eines privaten Schlüssels der vertrauenswürdigen Instanz digital signiert. Die digitale Signatur der Lizenzinformation kann somit in der Recheneinrichtung anhand des öffentlichen Schlüssels der vertrauenswürdigen Instanz überprüft werden. Auf diese Weise kann eine vertrauenswürdige und sichere Übermittlung der Lizenzinformation zur Recheneinrichtung gewährleistet werden.

Der entschlüsselte Lizenzcode kann mit einem unter Verwendung des symmetrischen Schlüssels verschlüsselten Hash-Wert versehen werden. Der verschlüsselte Hash-Wert des entschlüsselten Lizenzcodes kann dann in der Recheneinrichtung entschlüsselt und mit einem für den entschlüsselten Lizenzcode berechneten Hash-Wert auf Übereinstimmung überprüft werden. Dies bietet den Vorteil, daß sichergestellt ist, daß der Lizenzcode tatsächlich mit der zur Entschlüsselung vorgesehenen Speicherkarte entschlüsselt worden ist.

Vorzugsweise ist der symmetrische Schlüssel nur für einen Zugriffseinräumungsvorgang gültig und wird bei jeder Zugriffsanforderung neu erzeugt. Dies trägt zu einer weiteren Erhöhung der Sicherheit gegenüber Manipulationsversuchen bei.

Vorteilhafterweise umfaßt die Lizenzinformation zusätzlich den der Speicherkarte zugeordneten öffentlichen Schlüssel. Des weiteren wird die erste Zufallszahl mittels des der Speicherkarte zugeordneten privaten Schlüssels digital signiert an die Recheneinrichtung übermittelt wird. Die digitale Signatur der ersten Zufallszahl wird dann in der Recheneinrichtung anhand des der Speicherkarte zugeordneten öffentlichen Schlüssels überprüft. Die zweite Zufallszahl wird mittels des öffentlichen Schlüssels der Speicherkarte verschlüsselt an die Speicherkarte übermittelt und dort entschlüsselt. Diese Weiterbildung bietet den Vorteil einer gesicherten Übertragung der ersten und zweiten Zufallszahl zur Erzeugung des symmetrischen Schlüssels.

Entsprechend einer weiteren vorteilhaften Ausgestaltung der vorliegenden Erfindung werden der verschlüsselte Lizenzcode und die mit dem verschlüsselten Hash-Wert versehene Angabe der von der Speicherkarte auszuführenden Funktion über eine gesicherte Kommunikationsverbindung von der Recheneinrichtung über eine Leseeinrichtung an die Speicherkarte übermittelt. Hierdurch werden Manipulationsmöglichkeiten zur unberechtigten Erlangung des Zugriffs auf das computerbasierte Objekt weiter eingeschränkt.

Vorteilhafterweise wird durch die Speicherkarte eine dritte Zufallszahl erzeugt und diese an die Recheneinrichtung übermittelt. Durch die Recheneinrichtung kann dann für die Angabe der von der Speicherkarte auszuführenden Funktion ein Hash-Wert, der mittels des symmetrischen Schlüssels und der dritten Zufallszahl verschlüsselt wird, berechnet und verschlüsselt an die Speicherkarte übermittelt werden. Der mittels des symmetrischen Schlüssels und der dritten Zufallszahl verschlüsselte Hash-Wert wird schließlich durch die Speicherkarte entschlüsselt und mit einem für die Angabe der von der Speicherkarte auszuführenden Funktion berechneten Hash-Wert auf Übereinstimmung überprüft. Hierdurch ergibt sich ein wirksamer Wiederholungsschutz, so daß ein Abfangen von zwischen der Speicherkarte und der Recheneinrichtung ausgetauschten Signalen keine wirksamen Manipulationsmöglichkeiten eröffnet. Außerdem bietet diese Ausgestaltung bietet den Vorteil, daß verfügbare Secure-Messaging-Verfahren für eine Übermittlung eines entsprechenden Funktionsaufrufs zur Entschlüsselung des Lizenzcodes verwendet werden können.

Zur Gewährleistung eines Wiederholungsschutzes in bezug auf eine Übermittlung des entschlüsselten Lizenzcodes an die Recheneinrichtung wird entsprechend einer weiteren Ausgestaltung in der Recheneinrichtung eine vierte Zufallszahl erzeugt und diese an die Speicherkarte übermittelt. Durch die Speicherkarte wird dann für den entschlüsselten Lizenzcode ein Hash-Wert, der mittels des symmetrischen Schlüssels und der vierten Zufallszahl verschlüsselt wird, berechnet und verschlüsselt an die Recheneinrichtung übermittelt. Der mittels des symmetrischen Schlüssels und der vierten Zufallszahl verschlüsselte Hash-Wert kann anschließend in der Recheneinrichtung entschlüsselt und mit einem für den entschlüsselten Lizenzcode berechneten Hash-Wert auf Übereinstimmung überprüft werden.

Entsprechend einer bevorzugten Ausgestaltung der vorliegenden Erfindung werden zur Einräumung des Zugriffs auf das computerbasierte Objekt der entschlüsselte Lizenzcode und ein Überprüfungsprozeßverlauf mit einer jeweiligen Soll-Vorgabe abgeglichen. Dies bietet zusätzliche Sicherheit, da ein Vorliegen des entschlüsselten Lizenzcodes für eine Zugriffsberechtigung alleine nicht mehr ausreichend ist, sondern an einen erfolgreichen Überprüfungsprozeßverlauf gekoppelt ist.

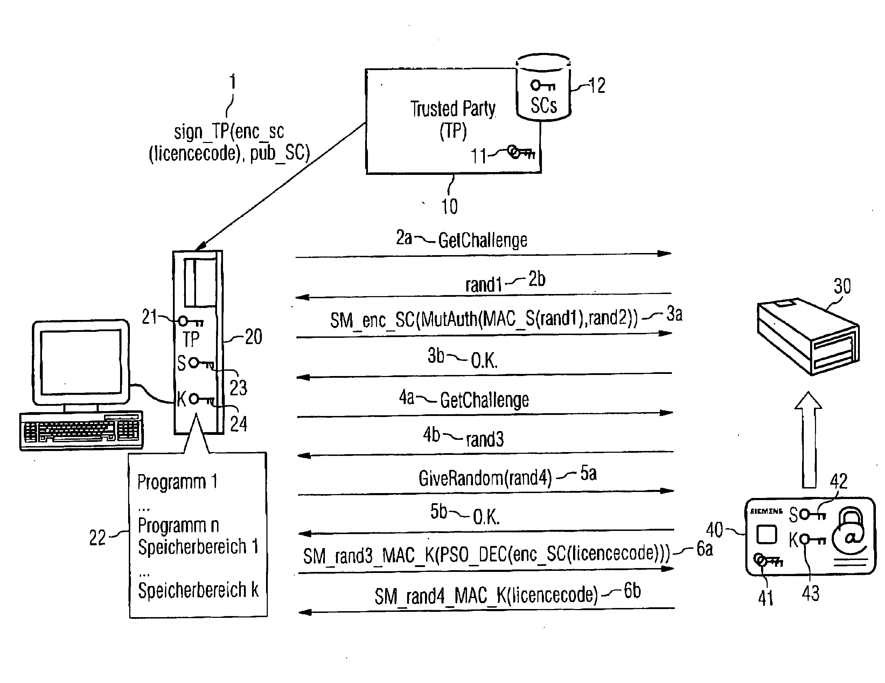

Die vorliegende Erfindung wird nachfolgend an einem Ausführungsbeispiel anhand der Zeichnung näher erläutert.

Es zeigt die Figur eine schematische Darstellung eines Anwendungsumfeldes der vorliegenden Erfindung mit einem Informations- und Meldungsaustausch zwischen einer vertrauenswürdigen Instanz, einer den Zugriff auf ein computerbasiertes Objekt steuernden Recheneinrichtung und einer Speicherkarte mit Programmcodeprozessor.

Das in der Figur dargestellte Anwendungsumfeld der vorliegenden Erfindung umfaßt eine vertrauenswürdige Instanz 10, einen Computer 20, ein mit dem Computer 20 verbundenes Smartcard-Terminal 30, in das eine Smartcard 40 einführbar ist. Die vertrauenswürdige Instanz 10 kann beispielsweise einem Hersteller einer gegen unberechtigten Zugriff zu schützenden Software zugeordnet sein und übernimmt eine Verwaltung von Lizenzen und zu Smartcards zugeordnetem Schlüsselmaterial. Der vertrauenswürdigen Instanz 10 ist ferner ein asymmetrisches Schlüsselpaar 11 zugeordnet, das einen privaten und einen öffentlichen Schlüssel umfaßt. Zur Abspeicherung des zu Smartcards zugeordnetem Schlüsselmaterial ist eine Datenbasis 12 vorgesehen, welche öffentliche Schlüssel auszuliefernder bzw. bereits ausgelieferter Smartcards enthält.

Durch den Computer 20 werden für einen oder mehrere Benutzer Systemressourcen 22 verfügbar gemacht, die beispielsweise Programme oder Speicherbereiche mit Daten umfassen. Das hier beschriebene Verfahren zur Einräumung eines Zugriffs auf ein computerbasiertes Objekt ist grundsätzlich auf beliebige Systemressourcen anwendbar. Der Computer 20 steuert insbesondere einen Zugriff auf die Systemressourcen 22, die im vorliegenden Fall auch Software des Herstellers umfassen, welchem die vertrauenswürdige Instanz 10 zugeordnet ist. Des weiteren wird der öffentliche Schlüssel 21 der vertrauenswürdigen Instanz 10 vor Manipulation geschützt am Computer 20 bereitgestellt.

Mit dem Computer 20 ist das Smartcard-Terminal 30 über eine gesicherte Kommunikationsverbindung verbunden. Das Smartcard-Terminal 30 dient zum Informations- und Meldungsaustausch zwischen dem Computer 20 und einer in das Smartcard-Terminal 30 einführbaren Smartcard 40, die eine Speicherkarte mit einem Programmcodeprozessor darstellt. Auf der Smartcard 40 ist ein der Smartcard 40 zugeordnetes asymmetrisches Schlüsselpaar 41 abgespeichert, das einen öffentlichen und einen privaten Schlüssel der Smartcard 40 umfaßt. Außerdem ist auf der Smartcard 40 zumindest ein Programm vorgesehen zur Ver- und Entschlüsselung unter Nutzung des asymmetrischen Schlüsselpaares 42 der Smartcard 40. Darüber hinaus verfügt die Smartcard 40 über einen Zufallszahlengenerator und ist vorzugsweise konform zu ISO 7816/8.

Am Computer 20 wird eine von der vertrauenswürdigen Instanz 10 erstellte Lizenzinformation 1 bereitgestellt. Die Lizenzinformation 1 umfaßt einen mittels des der Smartcard 40 zugeordneten öffentlichen Schlüssels verschlüsselten Lizenzcode (enc_SC(licencecode)) und den der Smartcard 40 zugeordneten öffentlichen Schlüssel (pub_SC). Des weiteren ist die Lizenzinformation 1 mittels des privaten Schlüssels der vertrauenswürdigen Instanz 10 digital signiert (sig_TP), so daß die digitale Signatur der Lizenzinformation 1 im Computer 20 anhand des öffentlichen Schlüssels 21 der vertrauenswürdigen Instanz 10 überprüft werden kann.

Zur Erzeugung eines symmetrischen Schlüssels (K) 24, 43, der nur für einen Zugriffseinräumungsvorgang gültig ist und bei jeder Zugriffsanforderung neu zu erzeugen ist, wird zunächst die Smartcard 40 mittels einer Anforderungsmeldung 2a (Get-Challenge) des Computers 20 zur Erzeugung einer ersten Zufallszahl (rand1) aufgefordert- Nach Erzeugung der ersten Zufallszahl durch die Smartcard 40 wird die Anforderungsmeldung 2a durch Übermittlung einer Ergebnismeldung 2b (rand1) mit der ersten Zufallszahl beantwortet. Je nach Sicherheitsanforderung kann die erste Zufallszahl auch mit dem privaten Schlüssel der Smartcard 40 digital signiert an den Computer 20 übermittelt und dort verifiziert werden werden.

Nach Empfang der ersten Zufallszahl erzeugt der Computer 20 eine zweite Zufallszahl (rand2) und übermittelt diese unter Anwendung von Secure-Messaging durch ein mit dem öffentlichen Schlüssel der Smartcard 40 verschlüsseltes Mutual-Authenticate-Kommando 3a (SM_<enc_SC(MutAuth())) an die Smartcard 40. Das Mutual-Authenticate-Kommando 3a umfaßt die zweite Zufallszahl sowie einen zur ersten Zufallszahl unter Verwendung eines weiteren symmetrischen Schlüssels (S) 23, 42 gebildeten Message-Authentification-Code (MAC_S). Der weitere symmetrische Schlüssel 23, 42 ist sowohl im Computer 20 als auch auf der Smartcard 40 gespeichert, dient einer gegenseitigen Authentifizierung zwischen dem Computer 20 und der Smartcard 40 und braucht nicht notwendigerweise geheim gehalten zu werden. Der zur ersten Zufallszahl gebildete Message-Authentification-Code umfaßt neben der ersten Zufallszahl einen für die erste Zufallszahl gebildeten und mit dem weiteren symmetrischen Schlüssel 23, 42 verschlüsselten Hash-Wert.

Zur Bestätigung einer erfolgreichen Entschlüsselung des Mutual-Authenticate-Kommandos sowie Überprüfung des Message-Authentification-Codes und damit des Empfangs der zweiten Zufallszahl wird eine Bestätigungsmeldung 3b an den Computer 20 übermittelt. Somit ist sichergestellt, daß die erste und zweite Zufallszahl sowohl im Computer 20 als auch auf der Smartcard 40 zur Erzeugung des symmetrischen Schlüssels 24, 43 vorliegen. Die Erzeugung des symmetrischen Schlüssels erfolgt dann im Computer 20 und auf der Smartcard 40 unabhängig voneinander. Der symmetrische Schlüssel 24, 43 ist somit sowohl im Computer 20 als auch auf der Smartcard 40 zumindest für die Dauer eines Zugriffseinräumungsvorgangs verfügbar. Durch die Erzeugung des symmetrischen Schlüssels 24, 43 ist eine Grundlage dafür gelegt, später einen Funktionsaufruf zur Entschlüsselung des Lizenzcodes (PSO_DEC - perform securitiy operation mode decrypt, angewendet auf den mittels des öffentlichen Schlüssels der Smartcard 40 verschlüsselten Lizenzcode) unter Anwendung von Secure-Messaging an die Smartcard 40 zu übermitteln.

Nachfolgend wird die Smartcard 40 zur Realisierung eines Wiederholungsschutzes mittels einer Anforderungsmeldung 4a (Get-Challenge) des Computers 20 zur Erzeugung einer dritten Zufallszahl (rand3) aufgefordert. Nach Erzeugung der dritten Zufallszahl durch die Smartcard 40 wird die Anforderungsmeldung 4a durch Übermittlung einer Ergebnismeldung 4b (rand3) mit der dritten Zufallszahl beantwortet. Anschließend wird im Computer 20 eine vierte Zufallszahl (rand4) erzeugt und diese mittels einer Meldung 5a (GiveRandom) an die Smartcard 40 übermittelt. Von der Smartcard 40 wird der Empfang der vierten Zufallszahl durch eine Bestätigungsmeldung 5b quittiert.

Nach quittierter Übermittlung der vierten Zufallszahl wird eine Meldung 6a zur Entschlüsselung des Lizenzcodes vom Computer 20 an die Smartcard 40 übermittelt. Die Meldung 6a zur Entschlüsselung des Lizenzcodes umfaßt neben dem verschlüsselten Lizenzcode eine Angabe einer von der Smartcard 40 auszuführenden Funktion zur Entschlüsselung des Lizenzcodes. Die Angabe der von der Smartcard 40 auszuführenden Funktion ist mit einem Hash-Wert versehen, der mittels des symmetrischen Schlüssels 24, 43 und der dritten Zufallszahl verschlüsselt ist. Der mittels des symmetrischen Schlüssels 24, 43 und der dritten Zufallszahl verschlüsselte Hash-Wert wird anschließend durch die Smartcard 40 entschlüsselt und mit einem für die Angabe der von der Smartcard 40 auszuführenden Funktion berechneten Hash-Wert auf Übereinstimmung überprüft.

Bei einem positivem Überprüfungsergebnis wird die Funktion zur Entschlüsselung des Lizenzcodes durch die Smartcard 40 ausgeführt und ein entschlüsselter Lizenzcode mittels einer Meldung 6b unter Anwendung von Secure-Messaging an den Computer 20 übermittelt. Zur Anwendung von Secure-Messaging berechnet die Smartcard 40 für den entschlüsselten Lizenzcode einen Hash-Wert, der mittels des symmetrischen Schlüssels 24, 43 und der vierten Zufallszahl verschlüsselt wird. Dieser verschlüsselte Hash-Wert wird zusammen mit dem entschlüsselten Lizenzcode an den Computer 20 übermittelt. Dort wird der Hash-Wert anschließend mittels des symmetrischen Schlüssels 24, 43 und der vierten Zufallszahl entschlüsselt und mit einem für den entschlüsselten Lizenzcode berechneten Hash-Wert auf Übereinstimmung überprüft.

Bei Übereinstimmung der Hash-Werte wird der entschlüsselte Lizenzcode zumindest temporär zum Zugriff auf die geschützte Software bzw. ein computerbasiertes Objekt bereitgestellt. Um denkbare Manipulationsmöglichkeiten auszuschließen, sollten der entschlüsselte Lizenzcode und ein Überprüfungsprozeßverlauf mit einer jeweiligen Soll-Vorgabe vor Einräumung des Zugriffs auf die geschützte Software abgeglichen werden. Bei erfolgreichem Abgleich kann dann der Zugriff eingeräumt werden.

Die Steuerung des Ablaufs des Verfahrens zur Einräumung eines Zugriffs auf geschützte Software bzw. ein computerbasiertes Objekt ist durch ein Steuerungsprogramm implementiert, das in einem Arbeitsspeicher des Computers 20 ladbar ist und zumindest ein Codeabschnitt aufweist, bei dessen Ausführung zunächst eine Erzeugung eines symmetrischen Schlüssels aus einer von einer Speicherkarte mit einem Programmcodeprozessor generierten ersten Zufallszahl und aus einer durch die Recheneinrichtung bereitgestellten zweiten Zufallszahl veranlaßt wird. Ferner wird eine Übermittlung eines mittels des der Speicherkarte zugeordneten öffentlichen Schlüssels verschlüsselten Lizenzcodes und einer mit einem unter Verwendung des symmetrischen Schlüssels verschlüsselten Hash-Wert versehenen Angabe einer von der Speicherkarte auszuführenden Funktion zur Entschlüsselung des Lizenzcodes an die Speicherkarte veranlaßt. Des weiteren wird bei Ausführung eine Entschlüsselung des verschlüsselten Hash-Werts durch die Speicherkarte und eine Überprüfung auf Übereinstimmung mit einem für die Angabe der von der Speicherkarte auszuführenden Funktion berechneten Hash-Wert veranlaßt. Bei positivem Überprüfungsergebnis werden dann eine Ausführung der Funktion zur Entschlüsselung des Lizenzcodes durch die Speicherkarte und eine Übermittlung eines verschlüsselten Lizenzcodes an den Computer 20 veranlaßt. Schließlich wird bei Ausführung des Codeabschnittes der entschlüsselte Lizenzcode zumindest temporär zum Zugriff auf das computerbasierte Objekt durch den Computer 20 bereitgestellt, wenn das Steuerungsprogramm im Computer 20 abläuft.

Die Anwendung der vorliegenden Erfindung ist nicht auf das hier beschriebene Ausführungsbeispiel beschränkt.

## Patentansprüche

1. Verfahren zur Einräumung eines Zugriffs auf ein computerbasiertes Objekt, bei dem
- eine Speicherkarte mit einem Programmcodeprozessor bereitgestellt wird, auf der zumindest ein der Speicherkarte zugeordneter öffentlicher und privater Schlüssel abgespeichert sind,
- eine Lizenzinformation, die zumindest einen mittels des der Speicherkarte zugeordneten öffentlichen Schlüssels verschlüsselten Lizenzcode umfaßt, an einer den Zugriff auf das computerbasierte Objekt steuernden Recheneinrichtung bereitgestellt wird,
- aus einer von der Speicherkarte generierten ersten Zufallszahl und aus einer durch die Recheneinrichtung bereitgestellten zweiten Zufallszahl ein symmetrischer Schlüssel erzeugt wird, der für die Speicherkarte und die Recheneinrichtung zugänglich gemacht wird,
- der verschlüsselte Lizenzcode und eine mit einem unter Verwendung des symmetrischen Schlüssels verschlüsselten Hash-Wert versehene Angabe einer von der Speicherkarte auszuführenden Funktion zur Entschlüsselung des Lizenzcodes an die Speicherkarte übermittelt werden,
- der verschlüsselte Hash-Wert von der Speicherkarte entschlüsselt und mit einem für die Angabe der von der Speicherkarte auszuführenden Funktion berechneten Hash-Wert auf Übereinstimmung überprüft wird,
- bei positivem Überprüfungsergebnis die Funktion zur Entschlüsselung des Lizenzcodes durch die Speicherkarte ausgeführt und ein entschlüsselter Lizenzcode an die Recheneinrichtung übermittelt wird,
- der entschlüsselte Lizenzcode zumindest temporär zum Zugriff auf das computerbasierte Objekt bereitgestellt wird.

2. Verfahren nach Anspruch 1,
bei dem der öffentliche Schlüssel der vertrauenswürdigen Instanz vor Manipulationen geschützt an der Recheneinrichtung bereitgestellt wird, bei dem die Lizenzinformation mittels eines privaten Schlüssels der vertrauenswürdigen Instanz digital signiert ist, und bei dem die digitale Signatur der Lizenzinformation in der Recheneinrichtung anhand des öffentlichen Schlüssels der vertrauenswürdigen Instanz überprüft wird.

3. Verfahren nach einem der Ansprüche 1 oder 2,
bei dem der entschlüsselte Lizenzcode mit einem unter Verwendung des symmetrischen Schlüssels verschlüsselten Hash-Wert versehen wird, und bei dem der verschlüsselte Hash-Wert des entschlüsselten Lizenzcodes in der Recheneinrichtung entschlüsselt und mit einem für den entschlüsselten Lizenzcode berechneten Hash-Wert auf Übereinstimmung überprüft wird.

4. Verfahren nach einem der Ansprüche 1 bis 3,
bei dem der symmetrische Schlüssel nur für einen Zugriffseinräumungsvorgang gültig ist und bei jeder Zugriffsanforderung neu erzeugt wird.

5. Verfahren nach einer der Ansprüche 1 bis 4,
bei dem
- die Lizenzinformation zusätzlich den der Speicherkarte zugeordneten öffentlichen Schlüssel umfaßt,
- die erste Zufallszahl mittels des der Speicherkarte zugeordneten privaten Schlüssels digital signiert an die Recheneinrichtung übermittelt wird,
- die digitale Signatur der ersten Zufallszahl in der Recheneinrichtung anhand des der Speicherkarte zugeordneten öffentlichen Schlüssels überprüft wird,
- die zweite Zufallszahl mittels des öffentlichen Schlüssels der Speicherkarte verschlüsselt an die Speicherkarte übermittelt und dort entschlüsselt wird.

6. Verfahren nach einem der Ansprüche 1 bis 5,
der verschlüsselte Lizenzcode und die mit dem unter Verwendung des symmetrischen Schlüssels verschlüsselten Hash-Wert versehene Angabe der von der Speicherkarte auszuführenden Funktion über eine gesicherte Kommunikationsverbindung von der Recheneinrichtung über eine Leseeinrichtung an die Speicherkarte übermittelt werden.

7. Verfahren nach einem der Ansprüche 1 bis 6,
bei dem durch die Speicherkarte eine dritte Zufallszahl erzeugt und diese an die Recheneinrichtung übermittelt wird, bei dem durch die Recheneinrichtung für die Angabe der von der Speicherkarte auszuführenden Funktion ein Hash-Wert, der mittels des symmetrischen Schlüssels und der dritten Zufallszahl verschlüsselt wird, berechnet und verschlüsselt an die Speicherkarte übermittelt wird, und bei dem der mittels des symmetrischen Schlüssels und der dritten Zufallszahl verschlüsselte Hash-Wert durch die Speicherkarte entschlüsselt und mit einem für die Angabe der von der Speicherkarte auszuführenden Funktion berechneten Hash-Wert auf Übereinstimmung überprüft wird.

8. Verfahren nach Anspruch 7,
bei dem in der Recheneinrichtung eine vierte Zufallszahl erzeugt und diese an die Speicherkarte übermittelt wird, bei dem durch die Speicherkarte für den entschlüsselten Lizenzcode ein Hash-Wert, der mittels des symmetrischen Schlüssels und der vierten Zufallszahl verschlüsselt wird, berechnet und verschlüsselt an die Recheneinrichtung übermittelt wird, und bei dem der mittels des symmetrischen Schlüssels und der vierten Zufallszahl verschlüsselte Hash-Wert in der Recheneinrichtung entschlüsselt und mit einem für den entschlüsselten Lizenzcode berechneten Hash-Wert auf Übereinstimmung überprüft wird.

9. Verfahren nach einem der Ansprüche 1 bis 8,
bei dem zur Einräumung des Zugriffs auf das computerbasierte Objekt der entschlüsselte Lizenzcode und ein Überprüfungsprozeßverlauf mit einer jeweiligen Soll-Vorgabe abgeglichen werden.

10. Steuerungsprogramm, das in einen Arbeitsspeicher einer Recheneinrichtung ladbar ist und zumindest einen Codeabschnitt aufweist, bei dessen Ausführung
- eine Erzeugung eines symmetrischen Schlüssels aus einer von einer Speicherkarte mit einem Programmcodeprozessor generierten ersten Zufallszahl und aus einer durch die Recheneinrichtung bereitgestellten zweiten Zufallszahl veranlaßt wird,
- eine Übermittlung eines mittels des der Speicherkarte zugeordneten öffentlichen Schlüssels verschlüsselten Lizenzcodes und einer mit einem unter Verwendung des symmetrischen Schlüssels verschlüsselten Hash-Wert versehenen Angabe einer von der Speicherkarte auszuführenden Funktion zur Entschlüsselung des Lizenzcodes an die Speicherkarte veranlaßt wird,
- eine Entschlüsselung des verschlüsselten Hash-Werts durch die Speicherkarte und eine Überprüfung auf Übereinstimmung mit einem für die Angabe der von der Speicherkarte auszuführenden Funktion berechneten Hash-Wert veranlaßt wird,
- bei positivem Überprüfungsergebnis eine Ausführung der Funktion zur Entschlüsselung des Lizenzcodes durch die Speicherkarte und eine Übermittlung eines entschlüsselten Lizenzcodes an die Recheneinrichtung veranlaßt werden,
- der entschlüsselte Lizenzcode zumindest temporär zum Zugriff auf das computerbasierte Objekt durch die Recheneinrichtung bereitgestellt wird,
wenn das Steuerungsprogramm in der Recheneinrichtung abläuft.

## Claims

1. Method for granting access to a computer-based object, in which
- a chip card containing a program code processor is provided, on which are saved at least one public and private key assigned to the chip card,
- an item of licence information, which comprises at least one licence code encrypted using the public key assigned to the chip card, is made available to a computing device controlling access to the computer-based object,
- a symmetric key is generated from a first random number generated by the chip card and from a second random number provided by the computing device, this symmetric key being made available to the chip card and the computing device,
- the encrypted licence code and a declaration of a function to be executed by the chip card for decrypting the licence code are sent to the chip card, said function declaration being furnished with a hash value encrypted using the symmetric key,
- the encrypted hash value is decrypted by the chip card and compared for a match with a hash value calculated for the declaration of the function to be executed by the chip card,
- if the comparison results in a match, the function for decrypting the licence code is executed by the chip card, and a decrypted licence code is sent to the computing device,
- the decrypted licence code is made available, at least temporarily, for access to the computer-based object.

2. Method according to Claim 1,
in which the computing device is provided with the public key of the trusted party, protected from manipulations, in which the licence information is digitally signed by a private key of the trusted party, and in which the digital signature of the licence information can be verified in the computing device using the public key of the trusted party.

3. Method according to either Claim 1 or 2,
in which the decrypted licence code is furnished with a hash value encrypted using the symmetric key, and in which the encrypted hash value of the decrypted licence code is decrypted in the computing device and compared for a match with a hash value calculated for the decrypted licence code.

4. Method according to any of Claims 1 to 3,
in which the symmetric key is only valid for one access-granting procedure, and is regenerated for every access request.

5. Method according to any of Claims 1 to 4,
in which
- the licence information additionally includes the public key assigned to the chip card,
- the first random number, digitally signed by the private key assigned to the chip card, is sent to the computing device,
- the digital signature of the first random number is then verified in the computing device using the public key assigned to the chip card,
- the second random number is encrypted using the public key of the chip card, sent to the chip card and decrypted there.

6. Method according to any of Claims 1 to 5,
in which the encrypted licence code and the declaration, furnished with the hash value encrypted using the symmetric key, of the function to be executed by the chip card, are sent via a secure communications link from the computing device via a read device to the chip card.

7. Method according to any of Claims 1 to 6,
in which a third random number is generated by the chip card and sent to the computing device, in which the computing device calculates a hash value for the declaration of the function to be executed by the chip card, the hash value being encrypted using the symmetric key and the third random number, and sends it encrypted to the chip card, and in which the hash value, encrypted using the symmetric key and the third random number, is decrypted by the chip card and compared for a match with a hash value calculated for the declaration of the function to be executed by the chip card.

8. Method according to Claim 7,
in which a fourth random number is generated in the computing device and sent to the chip card, in which the chip card calculates a hash value for the decrypted licence code, the hash value being encrypted using the symmetric key and the fourth random number, and sends it encrypted to the computing device, and in which the hash value, encrypted using the symmetric key and the fourth random number, is decrypted in the computing device and compared for a match with a hash value calculated for the decrypted licence code.

9. Method according to any of Claims 1 to 8,
in which in order to grant access to the computer-based object, the decrypted licence code and a verification process sequence are compared with a respective defined value.

10. Control program, which can be loaded in a RAM memory of a computing device, and which comprises at least one code segment, whose execution
- causes generation of a symmetric key from a first random number generated by a chip card containing a program code processor, and from a second random number provided by the computing device,
- causes the sending to the chip card of a licence code encrypted using the public key assigned to the chip card, and of a declaration of a function for decrypting the licence code to be executed by the chip card, said function declaration being furnished with a hash value encrypted using the symmetric key,
- causes decryption of the encrypted hash value by the chip card, and comparison for a match with a hash value calculated for the declaration of the function to be executed by the chip card,
- if the comparison results in a match, causes the function for decrypting the licence code to be executed by the chip card and a decrypted licence code to be sent to the computing device,
- results in the computing device making the decrypted licence code available, at least temporarily, for access to the computer-based object,
if the control program is running in the computing device.

## Revendications

1. Procédé pour aménager un accès à un objet informatisé, dans lequel
- une carte mémoire avec un processeur de code de programme est mise à disposition, carte mémoire sur laquelle au moins une clé publique et une clé privée associées à la carte mémoire sont mémorisées,
- une information de licence, qui comprend au moins un code de licence crypté au moyen de la clé publique associée à la carte mémoire, est fournie sur une unité de calcul commandant l'accès à l'objet informatisé,
- une clé symétrique, qui est rendue accessible à la carte mémoire et à l'unité de calcul, est produite à partir d'un premier nombre aléatoire généré par la carte mémoire et à partir d'un deuxième nombre aléatoire fourni par l'unité de calcul,
- le code de licence crypté et une indication, munie d'une valeur de hachage cryptée en utilisant la clé symétrique, d'une fonction à exécuter par la carte mémoire en vue du décryptage du code de licence sont transmis à la carte mémoire,
- la valeur de hachage cryptée est décryptée par la carte mémoire et est vérifiée pour savoir si elle coïncide avec une valeur de hachage calculée pour l'indication de la fonction à exécuter par la carte mémoire,
- si la vérification donne un résultat positif, la fonction pour le décryptage du code de licence est exécutée par la carte mémoire et un code de licence décrypté est transmis à l'unité de calcul,
- le code de licence décrypté est fourni au moins temporairement en vue de l'accès à l'objet informatisé.

2. Procédé selon la revendication 1,
dans lequel la clé publique de l'instance fiable est fournie, protégée contre des manipulations, sur l'unité de calcul, dans lequel l'information de licence est signée numériquement au moyen d'une clé privée de l'instance fiable et dans lequel la signature numérique de l'information de licence est vérifiée dans l'unité de calcul à l'aide de la clé publique de l'instance fiable.

3. Procédé selon l'une des revendications 1 ou 2,
dans lequel le code de licence décrypté est muni d'une valeur de hachage décryptée en utilisant la clé symétrique et dans lequel la valeur de hachage cryptée du code de licence décrypté est décryptée dans l'unité de calcul et est vérifiée pour savoir si elle coïncide avec une valeur de hachage calculée pour le code de licence décrypté.

4. Procédé selon l'une des revendications 1 à 3,
dans lequel la clé symétrique n'est valide que pour une opération d'aménagement d'accès et est à nouveau produite à chaque demande d'accès.

5. Procédé selon l'une des revendications 1 à 4,
dans lequel
- l'information de licence comprend en plus la clé publique associée à la carte mémoire,
- le premier nombre aléatoire signé numériquement au moyen de la clé privée associée à la carte mémoire est transmis à l'unité de calcul,
- la signature numérique du premier nombre aléatoire est vérifiée dans l'unité de calcul à l'aide de la clé publique associée à la carte mémoire,
- le deuxième nombre aléatoire crypté au moyen de la clé publique de la carte mémoire est transmis à la carte mémoire où il est décrypté.

6. Procédé selon l'une des revendications 1 à 5,
dans lequel le code de licence crypté et l'indication, munie de la valeur de hachage cryptée en utilisant la clé symétrique, de la fonction à exécuter par la carte mémoire sont transmis via une liaison de communication sécurisée de l'unité de calcul à la carte mémoire par l'intermédiaire d'un dispositif de lecture.

7. Procédé selon l'une des revendications 1 à 6,
dans lequel un troisième nombre aléatoire est produit par la carte mémoire et est transmis à l'unité de calcul, dans lequel une valeur de hachage qui est cryptée au moyen de la clé symétrique et du troisième nombre aléatoire est calculée par l'unité de calcul pour l'indication de la fonction à exécuter par la carte mémoire et est transmise cryptée à la carte mémoire et dans lequel la valeur de hachage cryptée au moyen de la clé symétrique et du troisième nombre aléatoire est décryptée par la carte mémoire et est vérifiée pour savoir si elle coïncide avec une valeur de hachage calculée pour l'indication de la fonction à exécuter par la carte mémoire.

8. Procédé selon la revendication 7,
dans lequel un quatrième nombre aléatoire est produit dans l'unité de calcul et est transmis à la carte mémoire, dans lequel une valeur de hachage qui est cryptée au moyen de la clé symétrique et du quatrième nombre aléatoire est calculée par la carte mémoire pour le code de licence décrypté et est transmise cryptée à l'unité de calcul et dans lequel la valeur de hachage cryptée au moyen de la clé symétrique et du quatrième nombre aléatoire est décryptée dans l'unité de calcul et est vérifiée pour savoir si elle coïncide avec une valeur de hachage calculée pour le code de licence décrypté.

9. Procédé selon l'une des revendications 1 à 8,
dans lequel, pour aménager l'accès à l'objet informatisé, le code de licence décrypté et une exécution de processus de vérification sont égalisés avec une prescription de consigne respective.

10. Programme de commande, qui peut être chargé dans une mémoire de travail d'une unité de calcul et qui comporte au moins une section de code, lors de l'exécution de laquelle
- une production d'une clé symétrique à partir d'un premier nombre aléatoire généré par une carte mémoire avec un processeur de code de programme et à partir d'un deuxième nombre aléatoire fourni par l'unité de calcul est provoquée,
- une transmission à la carte mémoire d'un code de licence crypté au moyen de la clé publique associée à la carte mémoire et d'une indication, munie d'une valeur de hachage cryptée en utilisant la clé symétrique, d'une fonction à exécuter par la carte mémoire en vue du décryptage du code de licence est provoquée,
- un décryptage de la valeur de hachage cryptée par la carte mémoire et une vérification pour savoir si elle coïncide avec une valeur de hachage calculée pour l'indication de la fonction à exécuter par la carte mémoire sont provoqués,
- en présence d'un résultat de vérification positif, une exécution de la fonction pour le décryptage du code de licence par la carte mémoire et une transmission d'un code de licence décrypté à l'unité de calcul sont provoqués,
- le code de licence décrypté est fourni par l'unité de calcul au moins temporairement pour l'accès à l'objet informatisé,
le programme de commande étant exécuté dans l'unité de calcul.
